# EUROPEAN PATENT APPLICATION

(11) **EP 4 841 944 A1**
(43) Date of publication of application: **18.11.2026**
(21) Application number: 25176735.6
(22) Date of filing: 15.05.2025
(51) Int. Cl.: H04L 12/28, H04L 12/46, H04L 9/40

(54) **DEVICES IN BUILDING AUTOMATION NETWORKS**

(71) Applicant: Siemens Schweiz AG, 8047 Zürich (CH)
(72) Inventor: Bögli, Daniel, 6312 Steinhausen (CH); Gollackner, Thomas, 6315 Oberägeri (CH)
(74) Representative: Siemens Patent Attorneys

(57) **Abstract**

Devices in building automation networks. A structure comprising an edge device (3) and/or a router (3), one or more first devices (4) and at least one second device (6); wherein the second device (6) is different from the one or more first devices (4); the structure comprising a network, the network comprising: a first network connection (2) for connecting the edge device (3) and/or the router (3) to a cloud computing arrangement (1) outside the structure; a second network connection (5) connecting the edge device (3) and/or the router (3) to the one or more first devices (4); wherein the edge device (3) and/or the router (3) comprises a virtual local area network module (3b); wherein the network comprises a first virtual local area network and a third network connection (7), the third network connection (7) connecting the VLAN module (3b) to the second device (6).

## Description

### Background

The present disclosure deals with an arrangement of a device within a network of a building. More specifically, the present disclosure deals with a device such as an Internet of Things device, wherein the device is part of a building automation network or of a local area network of a building.

Networks in buildings such as commercial and/or industrial and/or residential buildings comprise building automation networks and wide area networks. Building automation networks typically function to control heating and/or ventilation and/or air-conditioning inside these buildings. For example, valve of a room heater can receive a signal indicative of a temperature set point. Likewise, a sensor can record a signal indicative of room temperature and/or of humidity and/or of pollutants. The signal is then delivered to another device where the signal is processed. These signals can be received or transmitted via a plethora of protocol such as Modbus, LON, KNX or BACNet. Whilst some of these protocols enable encryption, others do not.

The various workstations and/or computers and/or servers and/or thin clients within a building or a site can connect to one another via a local area network. The network within the building can allow access to the Internet. Likewise, servers outside the building or outside the site can be configured to access computing devices within the local area network. Wide area networks can be used to interconnect various local area networks. A wide area network can also be part of a building or of a site, the wide area network connecting various local area networks within the building or within the site.

Routers and/or gateways can be used to interconnect these networks. For example, a gateway can connect computers within a local area network to actuators within a building automation network. A gateway can also connect servers within a wide area network to sensors within a building automation network.

Internet of Things devices (IoT devices) have special roles inside these networks. These devices sometimes do not receive updates or upgrades or their operating systems.

Consequently, one or more vulnerabilities can exist in those loT devices and those vulnerabilities are not readily mitigated by upgrades and/or by updates and/or by patches.

A European patent application EP2775685A1 was filed by ABB RESEARCH LTD on 6 March 2013. The application was published on 10 September 2014. EP2775685A1 deals with security zones in industrial control systems, wherein the control systems are used to extensively protect, control and monitor industrial processes in industrial plants.

According to EP2775685A1, a network comprises nodes and zones. Also, certain networks such as the Internet are not trusted. Nodes are then assigned to a zone such as a demilitarized zone depending on their exposure to one or more untrusted networks. Also, nodes with different criticality can be placed in different zones of the network.

A patent application WO2024/089203A1 was filed by BASF SE on 26 October 2023. The application was published on 2 May 2024. A priority date of 26 October 2022 is claimed. WO2024/089203A1 deals with redundant transmission in a distributed manufacturing automation system, wherein manufacturing in the system can be automated by sensors, actuators, robots, etc.

In the distributed manufacturing automation system of WO2024/089203A1, an automation apparatus sends a data item through a first cellular network. The data item is also sent through a second cellular network, the second cellular network being different from the first cellular network. The first and the second cellular network can both comprise demilitarized zones thereby enabling detection and mitigation of security breaches by the demilitarized zones.

A patent US11092981 B2 was granted on 17 August 2021. US11092981 B2 claims a priority date of 11 July 2017 and deals with control gain automation. More specifically, a controller computes a position and derives a control signal from the calculated position. The control signal is then sent to an actuator of a valve assembly.

The controller of US11092981B2 can be a heating and/or ventilation and/or air conditioning controller and can as such be a cloud computer. It is then necessary that the controller communicates with the actuator via a building network. Measures are thus required to inhibit security breaches emanating from any communication between the cloud controller and the actuator.

The instant disclosure provides a configuration wherein various devices can connect to a building network and can communicate with one another. Any security issues emanating from such communication are mitigated.

### Summary

The present disclosure deals with the integration of devices for heating and/or ventilation and/or air-conditioning (HVAC) into computer networks. Likewise, the present disclosure deals with the integration of building management devices into such networks. To that end, a virtual local area network is set up. In so doing, devices within the virtual local area network are isolated from other devices in the network. That is, a device within the virtual area network is generally not able to initiate a connection to another local device. The other local device is local but outside the virtual local area network.

The HVAC devices and/or the building management devices connect to the virtual local area network. These devices can connect to a cloud computing arrangement and/or to a remote controller, wherein the cloud computing arrangement and/or the remote controller is outside the local network. The cloud computing arrangement and/or the remote controller are also outside the virtual local area network.

The connection between the HVAC devices and/or the building management devices on the one hand and the cloud computing arrangement on the other hand involves a module. The module can run on an edge device and/or on a router. The module can, by way of non-limiting example, be a software router running on the edge device. The module can by way of another limiting example, be a software router that is installed on a hardware router.

By connecting to the virtual local area network (VLAN) module, the HVAC devices and/or the building management devices become part of the virtual local area network. That is, the VLAN module upon connection of a HVAC device and/or of the building management device provides a network address to the device. The network address provided by the VLAN module is different from the addresses used by local devices that are outside the virtual local area network. A first range of addresses used by the devices in within the (first) virtual local area network is preferably different from a second range of addresses. The second range of addresses is used by local devices that are outside the (first) virtual local area network.

A firewall of the VLAN module can be configured such that any packet originating from the virtual local area network and targeting another local device is dropped. More specifically, any packet targeting another local device outside the (first) virtual local area network is dropped.

In an embodiment, devices within the virtual local area network can initiate connections to one another. In another embodiment, devices within the virtual local area network cannot initiate connections to one another. These configurations can involve settings such as (firewall) rules and/or subnet masks of the VLAN module.

A local device that is outside the virtual local area network can, in some cases, initiate a connection to a device inside the virtual local area network. To that end, techniques such as masquerading and/or network address translation are used. This typically involves (firewall) rules that are implemented by the edge device and/or by the hardware router.

The HVAC devices and/or the building management devices preferably come with a purely local and short-range configuration option. In other words, these devices provide a configuration module that can connect to a mobile handheld device. The mobile handheld device needs not be part of any local area network. A short-range link is typically limited to distances such as less than one hundred meters, less than ten meters, or even less than five meters.

The mobile handheld device can then write data to a non-volatile memory inside the HVAC device and/or inside the building management device. In an embodiment, the memory is write-only for the mobile handheld device, so the mobile handheld device cannot read the content of that memory. It is also envisaged that only a limited number of mobile handheld devices are whitelisted to connect to the configuration module.

The HVAC devices and/or the building management devices can thus interact with the cloud computing arrangement without interfering with potentially critical parts of the computer network. In so doing, these devices can send data such as room temperatures and/or values indicative of volatile organic compounds to the cloud and/or to the remote controller. It is also envisaged that the HVAC device comprises a burner control system and/or a heat pump. The burner control system can, by way of non-limiting example, download software updates from the cloud computing arrangement and/or from the remote controller. The heat pump can, by way of non-limiting example, download scheduling data from the cloud computing arrangement and/or from the remote controller. According to an aspect of the present disclosure, the scheduling information is sent to the heat pump in the context of model predictive control.

These data are sent and/or are downloaded without impacting on local parts of the computer network that are outside the virtual area network.

### Brief description of the drawings

Various features will become apparent to those skilled in the art from the following detailed description of the disclosed non-limiting embodiments. The drawings that accompany the detailed description can be briefly described as follows:
FIG 1 schematically illustrates a network configuration wherein a device is isolated.
FIG 2 schematically illustrates a wireless connection between the device and another device, the wireless connection enabling configuration.

### Detailed description

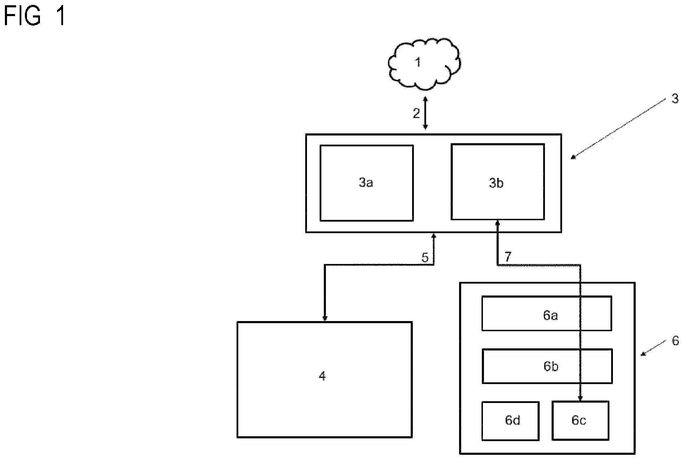

FIG 1 shows a system comprising a cloud computing arrangement 1 having a network connection 2 to an edge device 3.

The cloud computing arrangement 1 comprises at least one processor, a memory such as a non-volatile memory and a network port. The cloud computing arrangement 1 is adapted to connect to the edge device 3 using its network port. The network port can, by way of non-limiting example, be a hard-wired network port such as an ethernet port and/or a fibre-optic port. In a special embodiment, the network port is a hard-wired network port such as an ethernet port and/or a fibre-optic port. The network port can, by way of another non-limiting example, be a wireless network port such as a wireless local area network (WLAN) port and/or a WIFI port. In another special embodiment, the network port is a wireless network port such as a WLAN port and/or a WIFI port.

In an embodiment, the cloud computing arrangement 1 comprises more than one network port. The cloud computing arrangement 1 can, by way of non-limiting example, comprise network ports of different types such as an ethernet port and a fibre-optic port. The cloud computing arrangement 1 can, by way of another non-limiting example, comprise network ports of different types such as an ethernet port and a wireless port.

The cloud computing arrangement 1 preferably comprises a plurality of processors.

According to an aspect of the present disclosure, the cloud computing arrangement 1 comprises a cloud computer and/or a remote controller. According to a special aspect of the present disclosure, the cloud computing arrangement 1 is a cloud computer. According to another special aspect of the present disclosure, the cloud computing arrangement 1 is a remote controller.

The first network connection 2 comprises a network connection that is compatible with the network port of the cloud computing arrangement 1. The first network connection 2 can, by way of non-limiting example, comprise one or more ethernet cables. The first network connection 2 can, by way of non-limiting example, comprise one or more fibre-optic cables.

The first network connection 2 advantageously enables bidirectional communication between the cloud computing arrangement 1 and the edge device 3. A bidirectional connection affords flexibility.

The first network connection 2 preferably affords digital communication between the cloud computing arrangement 1 and the edge device 3. In other words, communication via the first network connection 2 implements a digital communication protocol. A digital communication bus can comprise the first network connection 2. In a special embodiment, the first network connection 2 is or implements a digital communication bus.

The edge device 3 is part of a structure. According to an aspect of the present disclosure, the structure comprises a commercial structure and/or an industrial structure and/or a residential structure. It is also envisaged that the structure is a commercial structure and/or is an industrial structure and/or is a residential structure. The cloud computing arrangement 1 is typically not part of the same structure as the edge device 3.

The cloud computing arrangement 1 can comprise a controller that is arranged remotely from the structure. The controller of the cloud computing arrangement 1 is advantageously arranged at least one kilometer from the structure. More specifically, cloud computing arrangement 1 can comprise a controller that is arranged remotely from the edge device 3.

Likewise, the cloud computing arrangement 1 can comprise a computer that is arranged remotely from the structure. The computer of the cloud computing arrangement 1 is advantageously arranged at least one kilometer from the structure. More specifically, the cloud computing arrangement 1 can comprise a computer that is arranged remotely from the edge device 3.

The edge device 3 can also be part of a building. According to an aspect of the present disclosure, the building comprises a commercial building and/or an industrial building and/or a residential building. It is also envisaged that the building is a commercial building and/or is an industrial building and/or is a residential building. In a special embodiment, the building comprises one or more walls made of carbon pressed concrete and/or made of carbon prestressed concrete.

The cloud computing arrangement 1 is typically not part of the same building as the edge device 3.

The cloud computing arrangement 1 can comprise a controller that is arranged remotely from the building. The controller of the cloud computing arrangement 1 is advantageously arranged at least one kilometer from the building. More specifically, the cloud computing arrangement 1 can comprise a controller that is arranged remotely from the edge device 3.

Likewise, the cloud computing arrangement 1 can comprise a computer that is arranged remotely from the building. The computer of the cloud computing arrangement 1 is advantageously arranged at least one kilometer from the building. More specifically, cloud computing arrangement 1 can comprise a computer that is arranged remotely from the edge device 3.

The edge device 3 comprises at least one processor, a memory such as a non-volatile memory and at least one first (network) port. The edge device 3 is adapted to connect to the cloud computing arrangement 1 using its at least one first (network) port. The at least one first (network) port can, by way of non-limiting example, comprise at least one first hard-wired port such as at least one first ethernet port. The at least one first (network) port can also comprise at least one first hard-wired network port such as at least one first fibre-optic port. In a special embodiment, the at least one first (network) port is at least one first hard-wired network port such as at least one first ethernet port. In another special embodiment, the at least one first (network) port is at least one first hard-wired network port such as at least one first fibre-optic port. The at least one first (network) port can also comprise at least one first wireless port such as at least one first WLAN port. The at least one first (network) port can still comprise a first wireless port such as at least one first WIFI port. In another special embodiment, the at least one first (network) port is at least one first wireless network port such as at least one first WLAN port. In yet another embodiment, the at least one first (network) port is at least one first wireless network port such as at least one first WIFI port.

In an embodiment, the edge device 3 comprises more than one network port. The edge device 3 can, by way of non-limiting example, comprise network ports of different types such as at least one first ethernet port and at least one first fibre-optic port. The device 3 can also comprise network ports of different types such as at least one first ethernet port and at least one first wireless port.

The edge device 3 advantageously comprises a microcontroller and/or a microprocessor. In an embodiment, the edge device 3 is a microcontroller and/or is a microprocessor. The edge device 3 preferably comprises a memory such as a non-volatile memory. That is, the edge device 3 can comprise a microcontroller and a non-volatile memory. The edge device 3 can also comprise a microprocessor and a non-volatile memory. The edge device 3 can still be a microcontroller having a non-volatile memory and one or more (first) network ports. The edge device 3 can also be a microprocessor having a non-volatile memory and one or more (first) network ports.

According to an aspect of the present disclosure, the edge device 3 comprises a router. According to a special aspect of the present disclosure, the edge device 3 is a router. The edge device 3 and/or the router advantageously are hardware devices.

The edge device 3 advantageously comprises a DNS module 3a. The DNS module 3a of the edge device 3 provides domain name services within the structure. The DNS module 3a of the edge device 3 can also provide domain name services within the building.

The DNS module 3a of the edge device 3 can be implemented as a software running on the edge device 3. More specifically, the edge device 3 can employ operating system level virtualisation. The DNS module 3a is thus part of a container running on the edge device 3.

In an embodiment, the router 3 comprises a DNS module 3a. The DNS module 3a of the router 3 provides domain name services within the structure. The DNS module 3a of the router 3 can also provide domain name services within the building.

The DNS module 3a of the router 3 can be implemented as a software running on the router 3. More specifically, the router 3 can employ operating system level virtualisation. The DNS module 3a is thus part of a container running on the router 3.

The edge device 3 preferably acts as a default gateway for one or more first devices 4 within the structure. That is, the one or more first devices 4 within the structure use the edge device 3 to connect to computers and/or controllers outside the structure. The one or more first devices 4 within the structure can also rely on the edge device 3 to connect to one another. The one or more first devices 4 can, by way of non-limiting example, use the edge device 3 to connect to the cloud computing arrangement 1.

The edge device 3 can also act as a default gateway for one or more first devices 4 within the building. That is, the one or more first devices 4 within the building use the edge device 3 to connect to computers and/or controllers outside the building. The one or more first devices 4 within the building can also rely on the edge device 3 to connect to one another. The one or more first devices 4 can, by way of non-limiting example, use the edge device 3 to connect to the cloud computing arrangement 1.

The DNS module 3a advantageously provides domain name services to one or more first devices 4 within the structure. The DNS module 3a ideally provides domain name services to one or more first devices 4 within the building.

The edge device 3 can connect to the one or more first devices 4 using at least one second (network) port. The edge device 3 is adapted to connect to the one or more first devices 4 using its at least one second (network) port. Likewise, the router 3 can connect to the one or more first devices 4 using at least one second (network) port. The router 3 is then adapted to connect to the one or more first devices 4 using its at least one second (network) port.

The at least one second port can, by way of non-limiting example, comprise at least one second hard-wired port such as at least one second ethernet port. The at least one second port can also comprise at least one second hard-wired port such as at least one second fibre-optic port. In a special embodiment, the at least one second (network) port is a second hard-wired network port such as at least one second ethernet port. In another special embodiment, the at least one second (network) port is a second hard-wired network port such as at least one second fibre-optic port. The at least one second (network) port can, by way of another non-limiting example, comprise a second wireless port such as at least one second WLAN port. The at least one second (network) port can also comprise a second wireless port such as at least one second WIFI port. In another special embodiment, the at least one second (network) port is at least one second wireless network port such as at least one second WLAN port. In yet another embodiment, the at least one second (network) port is at least one second wireless network port such as at least one second WIFI port.

The at least one second (network) port of the edge device 3 can be physically separate from the at least one first network port of the edge device 3. However, special configurations exist wherein the at least one first and the at least one second (network) ports of the edge device 3 are not physically different.

The at least one second (network) port of the router 3 can be physically separate from the at least one first network port of the router 3. However, special configurations exist wherein the at least one first and the at least one second (network) ports of the router 3 are not physically different.

A second network connection 5 enables communication between the edge device 3 and the one or more first devices 4. Likewise, a second network connection 5 can enable communication between the router 3 and the one or more first devices 4.

The second network connection 5 comprises a network connection that is compatible with the at least one second (network) port of the edge device 3. Likewise, the second network connection 5 can comprise a network connection that is compatible with the at least one second (network) port of the router 3. The second network connection 5 can, by way of non-limiting example, comprise one or more ethernet cables. The second network connection 5 can, by way of non-limiting example, comprise one or more fibre-optic cables.

The second network connection 5 advantageously enables bidirectional communication between the edge device 3 and the one or more first devices 4. The second network connection 5 can also enable bidirectional communication between the router 3 and the one or more first devices 4. A bidirectional connection affords flexibility.

The second network connection 5 preferably affords digital communication between the edge device 3 and the one or more first devices 4. The second network connection 5 can also afford digital communication between the router 3 and the one or more first devices 4. In other words, communication via the second network connection 5 implements a digital communication protocol. A digital communication bus can comprise the second network connection 5. In a special embodiment, the second network connection 5 is or implements a digital communication bus.

The edge device 3 also implements a virtual local area network (VLAN) module 3b. In an embodiment, the edge device 3 comprises a VLAN module 3b. More specifically, the router 3 can implement a VLAN module 3b. In an embodiment, the router 3 comprises a VLAN module 3b.

The VLAN module 3b can be implemented by the edge device 3 as a software running on the edge device 3. More specifically, the edge device 3 can employ operating system level virtualisation. The VLAN module 3b is thus part of a container running on the edge device 3.

A VLAN module 3b can also be implemented by the router 3 as a software running on the router 3. More specifically, the router 3 can employ operating system level virtualisation. The VLAN module 3b is thus part of a container running on the router 3.

The VLAN module 3b is distinct from the DNS module 3a. To that end, the VLAN module 3b and the DNS module 3a can software-wise be implemented by different containers. The VLAN module 3b is advantageously also software-wise separated from the DNS module 3a. To that end, the VLAN module 3b and the DNS module 3a can software-wise be implemented by separate containers. The VLAN module 3b can even software-wise be isolated from the DNS module 3a. To that end, the VLAN module 3b and the DNS module 3a can be implemented by containers that are software-wise isolated from one another.

The edge device 3 uses the VLAN module 3b to connect to one or more second devices 6 within the structure or within the building. Likewise, the router 3 can use the VLAN module 3b to connect to one or more second devices 6 within the structure or within the building. The one or more second devices 6 are distinct from the one or more first devices 4. The one or more second devices 6 are advantageously also separate from the one or more first devices 4. The one or more second devices 6 can even be isolated from the one or more first devices 4.

The one or more first devices 4 and the one or more second devices 6 advantageously are hardware devices. It is envisaged that the one or more first devices 4 and the one or more second devices 6 and the edge device 3 and/or the router 3 are hardware devices.

It is envisaged that the one or more second devices 6 comprise one or more Internet-of-**T**hings (IoT) devices. It is still envisaged that the one or more second devices 6 are one or more **I**nternet-of-**T**hings (IoT) devices. In a special embodiment, the one or more second devices 6 comprise at least one control valve. In another special embodiment, the one or more second devices 6 are control valves.

One or more control valves can control a flow of a medium through a conduit within a structure. The one or more control valves can be used to control heating and/or ventilation and/or air-conditioning within the structure. To that end, the one or more control valves can comprise one or more microcontrollers and/or microprocessors. The one or more control valves preferably comprise one or more memories. More specifically, the one or more memories can comprise one or more non-volatile memories. The one or more memories can even be one or more non-volatile memories. That is, the one or more control valves can comprise one or more microcontrollers and one or more non-volatile memories. The one or more control valves can also comprise one or more microprocessors and one or more non-volatile memories. The one or more control valves can additionally comprise one or more network ports for communication with a superordinate controller such as a system controller. The superordinate controller and/or the system controller can be part of the cloud computing arrangement 1. That is, the one or more control valves can communicate with a controller outside the structure.

The one or more control valves can also control a flow of a medium through a conduit within a building. The one or more control valves can be used to control heating and/or ventilation and/or air-conditioning within the building. To that end, the one or more control valves can comprise one or more microcontrollers and/or microprocessors. The one or more control valves preferably comprise one or more memories. The one or more memories can comprise one or more non-volatile memories. More specifically, the one or more memories can even be one or more non-volatile memories. That is, the one or more control valves can comprise one or more microcontrollers and one or more non-volatile memories. The one or more control valves can also comprise one or more microprocessors and one or more non-volatile memories. The one or more control valves can additionally comprise one or more network ports for communication with a superordinate controller such as a system controller. The superordinate controller and/or the system controller can be part of the cloud computing arrangement 1. That is, the one or more control valves can communicate with a controller outside the building.

The edge device 3 preferably acts as a default gateway for the one or more second devices 6 within the structure. That is, the one or more second devices 6 within the structure use the edge device 3 to connect to computers and/or to controllers outside the structure. Likewise, the router 3 can act as a default gateway for one or more second devices 6 within the structure. The one or more second devices 6 within the structure then use the router 3 to connect to computers and/or to controllers outside the structure.

More specifically, the VLAN module 3b can provide a default gateway for the one or more second devices 6 within the structure. That is, the one or more second devices 6 within the structure use the VLAN module 3b to connect to computers and/or to controllers outside the structure.

The edge device 3 can also act as a default gateway for one or more second devices 6 within the building. That is, the one or more second devices 6 within the building use the edge device 3 to connect to computers and/or to controllers outside the building. Likewise, the router 3 can act as a default gateway for one or more second devices 6 within the building. The one or more second devices 6 within the building then use the router 3 to connect to computers and/or to controllers outside the building.

More specifically, the VLAN module 3b can provide a default gateway for the one or more second devices 6 within the building. That is, the one or more second devices 6 within the building use the VLAN module 3b to connect to computers and/or controllers outside the building. The one or more second devices 6 within the building can also rely on the edge device 3 and/or on the router 3 to connect to one another.

The edge device 3 can connect to the one or more second devices 6 using at least one third (network) port. The edge device 3 is adapted to connect to the one or more second devices 6 using its at least one third (network) port. Likewise, the router 3 can connect to the one or more second devices 6 using at least one third (network) port. The router 3 is then adapted to connect to the one or more second devices 6 using its at least one third (network) port.

The at least one third port can, by way of non-limiting example, comprise at least one third hard-wired port such as at least one third ethernet port. The at least one third port can also comprise at least one third hard-wired port such as at least one third fibre-optic port. In a special embodiment, the at least one third (network) port is a third hard-wired network port such as at least one third ethernet port. In another special embodiment, the at least one third (network) port is a third hard-wired network port such as at least one third fibre-optic port. The at least one third (network) port can, by way of another non-limiting example, comprise a third wireless port such as at least one third WLAN port. The at least one third (network) port can also comprise a third wireless port such as at least one third WIFI port. In another special embodiment, the at least one third (network) port is at least one third wireless network port such as at least one third WLAN port. In yet another embodiment, the at least one third (network) port is at least one third wireless network port such as at least one third WIFI port.

The at least one third (network) port of the device 3 can be physically separate from the at least one first (network) port of the device 3. However, special configurations exist wherein the at least one first and the at least one third (network) ports of the edge device 3 are not physically different. The at least one third (network) port of the device 3 can also be physically separate from the at least one second (network) port of the device 3. However, special configurations exist wherein the at least one second and the at least one third (network) ports of the edge device 3 are not physically different.

The at least one third port of the device 3 can be physically separate from the at least one first and second ports of the device 3.

The at least one third (network) port of the router 3 can be physically separate from the at least one first (network) port of the router 3. However, special configurations exist wherein the first and the third (network) ports of the router 3 are not physically different. The at least one third (network) port of the router 3 can also be physically separate from the at least one second (network) port of the router 3. However, special configurations exist wherein the second and the third (network) ports of the router 3 are not physically different.

The at least one third port of the router 3 can be physically separate from the at least one first and second ports of the router 3.

A third network connection 7 enables communication between the edge device 3 and the one or more second devices 6. Likewise, a third network connection 7 can enable communication between the router 3 and the one or more second devices 6.

The third network connection 7 comprises a network connection that is compatible with the at least one third (network) port of the edge device 3. Likewise, the third network connection 7 can comprise a network connection that is compatible with the at least one third (network) port of the router 3. The third network connection 7 can, by way of non-limiting example, comprise one or more ethernet cables. The third network connection 7 can, by way of non-limiting example, comprise one or more fibre-optic cables.

The third network connection 7 advantageously enables bidirectional communication between the edge device 3 and the one or more second devices 6. The third network connection 7 can also enable bidirectional communication between the router 3 and the one or more second devices 6. A bidirectional connection affords flexibility.

The third network connection 7 preferably affords digital communication between the edge device 3 and the one or more second devices 6. The third network connection 7 can also afford digital communication between the router 3 and the one or more second devices 6.

More specifically, the third network connection 7 affords digital communication between the VLAN module 3b and the one or more second devices 6. It is envisaged that the third network connection 7 affords digital communication between the VLAN module 3b and the one or more loT devices. It is still envisaged that the third network connection 7 affords digital communication between the VLAN module 3b and the one or more control valves.

In other words, communication via the third network connection 7 implements a digital communication protocol. A digital communication bus can comprise the third network connection 7. In a special embodiment, the third network connection 7 is or implements a digital communication bus.

The third network connection 7 can be physically different from the second network connection 5. In other words, the physical layer of the third network connection 7 can be different from the physical layer of the second network connection 5. However, configurations exist wherein the second and the third network connections are not physically different.

The one or more second devices 6 comprise one or more second device ports 6a. Preferably, every second device 6 comprises a second device port 6a. The third connection 7 comprises a connection that is compatible with the one or more second device ports 6a of the one or more second devices 6. According to an aspect of the present disclosure, the one or more loT devices comprise one or more second device ports 6a.

Preferably, every loT device comprises a second device port 6a. The third connection 7 is then compatible with the one or more second device ports 6a of the one or more loT devices. It is envisaged that the one or more control valves comprise one or more second device ports 6a. Preferably, every control valve comprises a second device port 6a. The third connection 7 is then compatible with the one or more second device ports 6a of the one or more control valves.

The one or more second devices 6 also implement one or more firewall modules 6b. Preferably, every second device 6 implements a firewall module 6b. The one or more firewall modules 6b filter traffic directed to or originating from the one or more second device ports 6a. In an embodiment, the one or more second devices 6 comprise one or more firewall modules 6b. Preferably, every second device 6 comprises a firewall module 6b. Every second device 6 thus comprises a firewall module 6b that filters traffic directed to or originating from its second device port 6a.

According to an aspect of the instant disclosure, the one or more loT devices also implement one or more firewall modules 6b. The one or more firewall modules 6b filter traffic directed to or originating from the one or more second device ports 6a. Preferably, every loT device implements a firewall module 6b. In an embodiment, the one or more loT devices comprise one or more firewall modules 6b. Preferably, every loT device comprises a firewall module 6b. Every loT device thus comprises a firewall module 6b that filters traffic directed to or originating from its second device port 6a.

It is envisaged that the one or more control valves also implement one or more firewall modules 6b. The one or more firewall modules 6b filter traffic directed to or originating from the one or more second device ports 6a. Preferably, every control valve implements a firewall module 6b. In an embodiment, the one or more control valves comprise one or more firewall modules 6b. Preferably, every control valve comprises a firewall module 6b. Every control valve thus comprises a firewall module 6b that filters traffic directed to or originating from its second device port 6a.

The one or more firewall modules 6b can be implemented as one or more software modules running on the one or more second devices 6. More specifically, one or more second devices 6 can employ operating system level virtualisation. The one or more firewall modules 6b are thus part of one or more containers running on the one or more second devices 6. Preferably, every second device 6 comprises a firewall module 6b that is implemented as a software module running on the second device 6. More specifically, every second device 6 can employ operating system level virtualisation. The firewall module 6b is thus part of a container running on the second device 6.

The one or more firewall modules 6b can also be implemented as one or more software modules running on the one or more loT devices. More specifically, one or more loT devices can employ operating system level virtualisation. The one or more firewall modules 6b are thus part of one or more containers running on the one or more loT devices. Preferably, every loT device comprises a firewall module 6b that is implemented as a software module running on the loT device. More specifically, every loT device can employ operating system level virtualisation. The firewall module 6b is thus part of a container running on the loT device.

The one or more firewall modules 6b can still be implemented as one or more software modules running on the one or more control valves. More specifically, one or more control valves can employ operating system level virtualisation. The one or more firewall modules 6b are thus part of one or more containers running on the one or more control valves. Preferably, every control valve comprises a firewall module 6b that is implemented as a software module running on the control valve. More specifically, every control valve can employ operating system level virtualisation. The firewall module 6b is thus part of a container running on the control valve.

It is envisaged that the one or more firewall modules 6b have read access to one or more memories of the one or more second devices 6. According to an aspect of the present disclosure, the one or more memories of the one or more second devices 6 comprise one or more non-volatile memories. More specifically, the one or more memories of the one or more second devices 6 can be one or more non-volatile memories.

It is also envisaged that each of the one or more firewall modules 6b has read access to a memory of its respective second device 6. According to an aspect of the present disclosure, the memory of the second device 6 comprises a non-volatile memory. More specifically, the memory of each second device 6 can be a non-volatile memory.

Read access affords one or more firewall modules 6b that can at least read firewall rules and/or firewall tables from the one or more memories. In a specific embodiment, firewall rules and/or firewall tables are read from non-volatile memories. More specifically, read access can afford one or more second devices 6 wherein each module 6b can read firewall rules from a memory of the device 6. Likewise, read access can afford one or more second devices 6 wherein each firewall module 6b can read firewall tables from a memory of the device 6. In an embodiment, each firewall module 6b reads firewall rules and/or firewall tables from a non-volatile memory of its respective second device 6.

The one or more second devices 6 preferably implement one or more heating and/or ventilation and/or air-conditioning (HVAC) modules 6c. The one or more second devices 6 ideally comprise one or more HVAC modules 6c. Preferably, every second device 6 implements a HVAC module 6c. In a special embodiment, every second device 6 comprises a HVAC module 6c.

A HVAC module 6c of or implemented by a second device 6 carries out a task that is dedicated to the general functioning a structure or of a building. A HVAC module 6c can, by way of non-limiting example, read data from a temperature sensor inside the structure or inside the building. A HVAC module 6c can, by way of another non-limiting example, obtain readings indicative of volatile organic compounds inside the structure or inside the building. A HVAC module 6c can, by way of still another non-limiting example, operate a damper and/or a fan inside the structure or inside the building.

The one or more HVAC modules 6c can be implemented as one or more software modules running on the one or more second devices 6. More specifically, one or more second devices 6 can employ operating system level virtualisation. The one or more HVAC modules 6c are thus part of one or more containers running on the one or more second devices 6. Preferably, every second device 6 comprises a HVAC module 6c that is implemented as a software module running on the second device 6. More specifically, every second device 6 can employ operating system level virtualisation. The HVAC module 6c is thus part of a container running on the second device 6.

The one or more loT devices preferably implement one or more HVAC modules 6c. The one or more loT devices ideally comprise one or more HVAC modules 6c. Preferably, every loT device implements a HVAC module 6c. In a special embodiment, every loT device comprises a HVAC module 6c.

A HVAC module 6c of or implemented by an IoT device carries out a task that is dedicated to the general functioning a structure or of a building. The HVAC module 6c can, by way of non-limiting example, read data from a temperature sensor inside the structure or inside the building. The HVAC module 6c can, by way of another non-limiting example, obtain readings indicative of volatile organic compounds inside the structure or inside the building. The HVAC module 6c can, by way of still another non-limiting example, operate a damper and/or a fan inside the structure or inside the building. It is envisaged that the HVAC module 6c provides thermostat functionality inside the structure or inside the building. The thermostat can be or can comprise a smart thermostat.

The one or more HVAC modules 6c can be implemented as one or more software modules running on the one or more loT devices. More specifically, one or more loT devices can employ operating system level virtualisation. The one or more HVAC modules 6c are thus part of one or more containers running on the one or more loT devices. Preferably, every loT device comprises a HVAC module 6c that is implemented as a software module running on the loT device. More specifically, every loT device can employ operating system level virtualisation. The HVAC module 6c is thus part of a container running on the loT device.

The one or more control valves preferably implement one or more HVAC modules 6c. The one or more control valves ideally comprise one or more HVAC modules 6c. Preferably, every control valve implements a HVAC module 6c. In a special embodiment, every control valve comprises a HVAC module 6c.

A HVAC module 6c of or implemented by a control valve carries out a task that is dedicated to the general functioning a control valve. The module 6c can, by way of non-limiting example, read data φ, ΔT from a flow sensor or from one or more temperature sensors inside the valve. The HVAC module 6c can, by way of another non-limiting example, obtain readings indicative of exchanged thermal power φ · ΔT from the valve. The HVAC module 6c can, by way of still another non-limiting example, operate a valve member inside the control valve.

The one or more HVAC modules 6c can be implemented as one or more software modules running on the one or more control valves. More specifically, one or more control valves can employ operating system level virtualisation. The one or more HVAC modules 6c are thus part of one or more containers running on the one or more control valves. Preferably, every control valve comprises a HVAC module 6c that is implemented as a software module running on the control valve. More specifically, every control valve can employ operating system level virtualisation. The HVAC module 6c is thus part of a container running on the control valve.

It is envisaged that the one or more HVAC modules 6c have read access to one or more memories of the one or more devices 6. According to an aspect of the present disclosure, the one or more memories of the one or more second devices 6 comprise one or more non-volatile memories. More specifically, the one or more memories of the one or more second devices 6 can be one or more non-volatile memories.

It is also envisaged that each of the one or more HVAC modules 6c has read access to a memory of its respective second device 6. According to an aspect of the present disclosure, the memory of each second device 6 comprises a non-volatile memory. More specifically, the memory of each second device 6 can be a non-volatile memory.

Read access affords one or more HVAC modules 6c that can at least read configuration data from the one or more memories. In a specific embodiment, configuration data are read from non-volatile memories. More specifically, read access can afford one or more second devices 6 wherein each module 6c can read configuration data from a memory of the device 6. In an embodiment, each HVAC module 6c reads configuration data from a non-volatile memory of its respective second device 6.

The configuration data can, by way of example, specify addresses of one or more sensors within the structure and/or within the building. Accordingly, addresses of one or more sensors are available when the module 6c connects to the one or more sensors. The configuration data can, by way of another example, specify addresses of one or more actuators within the structure and/or within the building. Accordingly, addresses of one or more actuators are available when the module 6c connects to the one or more actuators. The configuration data can also specify sensors to be read by a HVAC module 6c and/or actuators to be operated by a HVAC module 6c.

In an embodiment, the configuration data specify one or more protocols to be used when a HVAC module 6c communicates with the cloud computing arrangement 1. The HVAC module 6c can, by way of non-limiting example, use a protocol such as BACnet and/or Modbus. The protocol to be used is then specified in the configuration data in one or more memories of the one or more second devices 6. In an embodiment, every second device 6 comprises a memory such as a non-volatile memory wherein configuration data specify a protocol to be used.

Advantageously, the one or more HVAC modules 6c can connect to the cloud computing arrangement 1. Hence, the one or more HVAC modules 6c can send data to the cloud computing arrangement 1. These data can, by way of non-limiting example, comprise one or more of:
- one or more room temperatures,
- one or more values indicative of volatile organic compounds,
- one or more flow rates φ through one or more control valves,
- one or more temperature drops ΔT across one or more control valves,
- one or more values indicative of exchanged thermal power φ · ΔT.

The one or more HVAC modules 6c can also receive one or more instructions and/or data from the cloud computing arrangement 1. The one or more instructions can, by way of non-limiting example, comprise at least one of:
- a request for a temperature to be read from a particular sensor,
- a request for value indicative of volatile organic compounds to be read,
- a request for a flow rate φ to be read from a flow sensor within a control valve,
- an instruction to set a damper inside a duct of the respective structure or building,
- an instruction to set the position of a valve member inside a control valve,
- an instruction to close or to open a valve inside a duct of the respective structure or building.

It is even envisaged that every HVAC module 6c can connect to the cloud computing arrangement 1. Hence, every HVAC module 6c can send data to the cloud computing arrangement 1. These data can, by way of non-limiting example, comprise one or more of:
- one or more room temperatures,
- one or more values indicative of volatile organic compounds,
- one or more flow rates φ through one or more control valves,
- one or more temperature drops ΔT across one or more control valves,
- one or more values indicative of exchanged thermal power φ · ΔT.

It is also envisaged that every HVAC module 6c can receive one or more instructions and/or data from the cloud computing arrangement 1. The one or more instructions can, by way of non-limiting example, comprise at least one of:
- a request for a temperature to be read from a particular sensor,
- a request for value indicative of volatile organic compounds to be read,
- a request for a flow rate φ to be read from a flow sensor within a control valve,
- an instruction to set a damper inside a duct of the respective structure or building,
- an instruction to set the position of a valve member inside a control valve,
- an instruction to close or to open a valve inside a duct of the respective structure or building.

To establish a connection between the HVAC module 6c and the cloud computing arrangement 1, the module 6c can send a data packet to the arrangement 1. The data packet is transmitted via the firewall module 6b, via the port 6a and via the VLAN module 3b. In the exemplary embodiment of FIG 1, that data packet is transmitted via the first and third network connections 2, 7.

Advantageously, the firewall module 6b implements rules such that the data packet cannot be transmitted to one or more first device 4 within the structure or within the building. The firewall module 6b can, by way of non-limiting example, comprise a whitelist. The whitelist comprises one or more addresses of the cloud computing arrangement 1. Accordingly, any data packet originating from a HVAC module 6c and not addressed to the cloud computing arrangement 1 will be dropped by the firewall module 6b.

The firewall module 6b can, by way of another non-limiting example, comprise a blacklist. The blacklist comprises one or more addresses outside an address space of the VLAN module 3b. More specifically, the blacklist can comprise one or more addresses of the one or more first devices 4. It is even envisaged that the blacklist comprises all the addresses of the one or more first devices 4. Accordingly, any data packet originating from a HVAC module 6c and not addressed to a first device 4 will be dropped by the firewall module 6b.

The firewall module 6b can not only whitelist and/or blacklist addresses, the module 6b can also whitelist and/or blacklist ports. In other words, one or more HVAC modules 6c can only connect to a list of ports of the cloud computing arrangement 1 as allowed by a whitelist. In an embodiment, the one or more modules 6c cannot connect to a list of ports of the cloud computing arrangement 1 as forbidden by a blacklist.

These whitelists and/or blacklists can be part of the aforementioned firewall rules. That is, one or more second devices 6 comprise (non-volatile) memories storing and applying whitelists and/or blacklists in their firewall rules. It is even envisaged that every second device 6 stores and applies whitelists and/or blacklists as part of its firewall rules. Likewise, these whitelists and/or blacklists can be part of the aforementioned firewall tables. That is, one or more second devices 6 comprise (non-volatile) memories storing whitelists and/or blacklists in their firewall tables. It is even envisaged that every second device 6 stores and applies whitelists and/or blacklists as part of its firewall tables.

In another embodiment, the VLAN module 3b isolates the one or more second devices 6 from the one or more first devices 4. Due to a configuration of the VLAN module 3b, the one or more second devices 6 cannot initiate connections to the one or more first devices 4. To that end, the VLAN module 3b can employ router and/or firewall functionality. In a special embodiment, the VLAN module 3b comprises a software router and the software router is part of the edge device 3. Likewise, the VLAN module 3b can comprise a software router and the software router is part of the router 3 of the structure or of the building. The VLAN module 3b is even envisaged as a software router wherein the software router is part of the edge device 3. Likewise, the VLAN module 3b can be a software router wherein the software router is part of the router 3 of the structure or of the building.

The one or more second devices 6 cannot initiate connections to the one or more first devices 4. The one or more first devices 4 can, in certain cases, initiate connections to the one or more second devices 6. The one or more first devices 4 can, by way of non-limiting example, access the one or more second devices 6 for configuration purposes.

To that end, the edge device 3 and/or the router 3 needs to be configured accordingly. This can involve masquerading and/or network address translation. Initiation of connections from one or more first devices 4 to the one or more second devices 6 can even involve masquerading and network address translation. Configuration of the VLAN module 3b employing a software router can also be necessary.

As regards configuration of the one or more second devices 6, it is envisaged that the one or more second devices 6 comprise one or more configuration modules 6d. It is even envisaged that every second device 6 comprises a configuration module 6d.

It is envisaged that the one or more configuration modules 6d have write access to one or more memories of the one or more second devices 6. According to an aspect of the present disclosure, the one or more memories of the one or more second devices 6 comprise one or more non-volatile memories. More specifically, the one or more memories of the one or more second devices 6 can be one or more non-volatile memories.

It is also envisaged that every module of the one or more configuration modules 6d has write access to a memory of its respective second device 6. According to an aspect of the present disclosure, the memory of every second device 6 comprises a non-volatile memory. More specifically, the memory of every second device 6 can be a non-volatile memory.

Write access affords one or more configuration modules 6d that can at least write configuration data to the one or more memories. In a specific embodiment, configuration data are written to non-volatile memories. More specifically, write access can afford one or more second devices 6 wherein every module 6d can write configuration to a memory of the device 6. In an embodiment, every configuration module 6d writes configuration data to a non-volatile memory of its respective second device 6.

The configuration data can, by way of example, specify addresses of one or more sensors within the structure and/or within the building. Accordingly, addresses of one or more sensors are available when a HVAC module 6c connects to the one or more sensors. The configuration data can, by way of another example, specify addresses of one or more actuators within the structure and/or within the building. Accordingly, addresses of one or more actuators are available when the HVAC module 6c connects to the one or more actuators. The configuration data can also specify sensors to be read by a HVAC module 6c and/or actuators to be operated by a HVAC module 6c.

In an embodiment, the configuration data specify one or more protocols to be used when a HVAC module 6c communicates with the cloud computing arrangement 1. The HVAC module 6c can, by way of non-limiting example, use a protocol such as BACnet and/or Modbus. The protocol to be used is then specified in the configuration data in one or more memories of the one or more second devices 6. In an embodiment, every second device 6 comprises a memory such as a non-volatile memory wherein configuration data specify a protocol to be used. In other words, a particular communication protocol can be set and/or can be chosen via the configuration module 6d.

According to a special aspect of the present disclosure, the one or more configuration modules 6d have write-only access to the one or more memories. The one or more configuration modules 6d can also have write-only access to the one or more non-volatile memories. It is even envisaged that every configuration module 6d has write-only access to the memory of its respective second device 6. Every configuration module 6d can even have write-only access to the non-volatile memory of its respective second device 6.

Write-only access mitigates potential leakages of configuration data and/or of sensitive information from the one or more second devices 6.

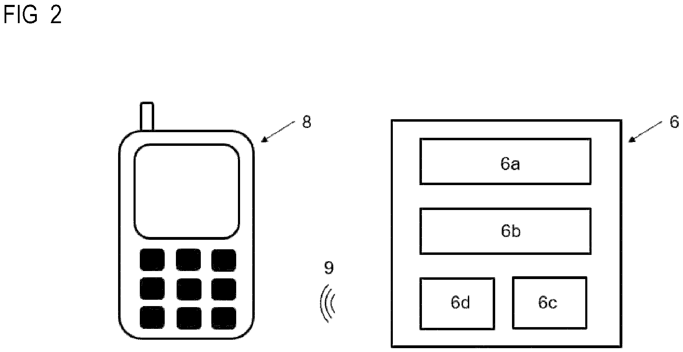

The one or more communication modules 6d are ideally accessible via purely local and short-range communication as shown in FIG 2. To that end, a mobile handheld device 8 connects to the one or more communication modules 6d via a purely local and short-range link 9. It is even envisaged that every communication module 6d is accessible via purely local and short-range communication as shown in FIG 2. To that end, a mobile handheld device 8 connects to the communication module 6d via a purely local and short-range link 9.

The mobile handheld device 8 can, by way of non-limiting example, comprise at least one of:
- a portable computer,
- a mobile phone,
- a tablet computer.

The mobile handheld device 8 can also be selected from:
- a portable computer,
- a mobile phone,
- a tablet computer.

The purely local and short-range link 9 can, by way of non-limiting example, comprise at least one of:
- a connection using near field communications,
- a Bluetooth connection,
- an infrared connection,
- an ultrawideband connection,
- a WLAN connection.

The purely local and short-range link 9 can also be selected from:
- a connection using near field communications,
- a Bluetooth connection,
- an infrared connection,
- an ultrawideband connection,
- a WLAN connection.

The purely local and short-range link 9 advantageously enables bidirectional communication between mobile handheld device 8 and the one or more second devices 6. More specifically, the purely local and short-range link 9 advantageously enables bidirectional communication between mobile handheld device 8 and the one or more configuration modules 6d. A bidirectional connection affords flexibility.

The purely local and short-range link 9 preferably affords digital communication between mobile handheld device 8 and the one or more second devices 6. More specifically, the purely local and short-range link 9 affords digital communication between mobile handheld device 8 and the one or more configuration modules 6d.

Advantageously, the purely local and short-range link 9 is limited to connections within the structure and/or within the building.

The purely local and short-range nature of the link 9 inhibits access to configuration data and/or to sensitive information from outside the structure and/or from outside the building.

In a special embodiment, the one or more second devices 6 comprise one or more mechanical buttons to enable the purely local and short-range link 9. There can also be pins that enable the purely local and short-range link 9. to Preferably, a link 9 will be enabled only for a limited period when a button or a pin is pressed. The limited period can, by way of non-limiting example, be less than thirty minutes long or less than five minutes long.

It is even envisaged that every second device 6 comprises a mechanical button to enable the purely local and short-range link 9. There can also be pins that enable the purely local and short-range link 9. Preferably, a link 9 will be enabled only for a limited period when a button or a pin is pressed. The limited period can, by way of non-limiting example, be less than thirty minutes long or less than five minutes long.

The mechanical button further inhibits unauthorized access to configuration data and/or to sensitive information.

As described in detail herein, the present disclosure deals with a structure comprising an edge device (3) and/or a router (3), one or more first devices (4) and at least one second device (6);
wherein the at least one second device (6) is different from the one or more first devices (4);
the structure comprising a network, the network comprising:
   a first network connection (2) for connecting the edge device (3) and/or the router (3) to a cloud computing arrangement (1) outside the structure;
   a second network connection (5) connecting the edge device (3) and/or the router (3) to the one or more first devices (4);
   wherein the edge device (3) and/or the router (3) comprises a virtual local area network (VLAN) module (3b);
   wherein the network comprises a first virtual local area network and a third network connection (7), the third network connection (7) connecting the VLAN module (3b) to the at least one second device (6), the at least one second device (6) being part of the first virtual local area network; and
   wherein the at least one second device (6) is configured to send one or more heating and/or ventilation and/or air-conditioning (HVAC) signals indicative of at least one of:
      - one or more room temperatures,
      - one or more values indicative of volatile organic compounds,
      - one or more flow rates φ through one or more control valves,
      - one or more temperature drops ΔT across the one or more control valves,
      - one or more values indicative of exchanged thermal power φ · ΔT
via the VLAN module (3b) to the cloud computing arrangement (1).

In an embodiment, the claimed structure comprises a building such as a commercial and/or industrial and/or residential building. It is even envisaged that the claimed structure is a building such as a commercial and/or industrial and/or residential building. In an embodiment, the structure comprises one or more rooms. In another embodiment, the building comprises one or more rooms. More specifically, the commercial and/or industrial and/or residential building can comprise one or more rooms. In an embodiment, the structure comprises one or more control valves. In another embodiment, the building comprises one or more control valves. More specifically, the commercial and/or industrial and/or residential building can comprise one or more control valves. It is even envisaged that the structure comprises one or more rooms and one or more control valves. It is still further envisaged that the building comprises one or more rooms and one or more control valves. More specifically, the commercial and/or industrial and/or residential building can comprise one or more rooms and one or more control valves. Similar considerations apply to structures and/or to buildings comprising spaces rather than or in addition to rooms.

The network preferably comprises a digital computer network. The network ideally is a digital computer network. The network can be a digital computer network within the structure. The network can even be a digital computer network within the building. It is envisaged that the network is a digital computer network within a commercial and/or industrial and/or residential building.

The present disclosure also pertains to any of the aforementioned structures and/or buildings, wherein the structure and/or the building comprises a first network connection (2) connected to the edge device (3) and/or to the router (3), the first network connection (2) being configured to connect the edge device (3) and/or the router (3) to a cloud computing arrangement (1) outside the structure and/or outside the building, respectively.

The second network connection (5) preferably comprises a second network connection that is local to the structure and/or to the building. The second network connection (5) ideally is a second network connection that is local to the structure and/or to the building. The second network connection (5) preferably comprises a second network connection through a local area network. The second network connection (5) ideally is a second network connection through a local area network. In an embodiment, the second network connection (5) comprises a second network connection through a local area network, the second network connection being local to the structure and/or to the building. It is even envisaged that the second network connection (5) is a second network connection through a local area network, the second network connection being local to the structure and/or to the building. Local in this context can mean within the structure and/or within the building.

The third network connection (7) preferably comprises a third network connection that is local to the structure and/or to the building. The third network connection (7) ideally is a third network connection that is local to the structure and/or to the building. The third network connection (7) preferably comprises a third network connection through the first virtual local area network. The third network connection (7) ideally is a third network connection through the first virtual local area network. In an embodiment, the third network connection (7) comprises a third network connection through the first virtual local area network, the third network connection being local to the structure and/or to the building. It is even envisaged that the third network connection (7) is a third network connection through the first virtual local area network, the third network connection being local to the structure and/or to the building. Local in this context can mean within the structure and/or within the building.

The instant disclosure also deals with any of the aforementioned structures and/or buildings,
wherein the network comprises a first virtual local area network and a third network connection (7), the third network connection (7) connecting the VLAN module (3b) to the at least one second device (6) such that the at least one second device (6) becomes part of the first virtual local area network.

The instant disclosure still deals with any of the aforementioned structures and/or buildings,
wherein the one or more first devices (4) are outside the first virtual local area network; and
wherein the network comprises a first virtual local area network and a third network connection (7), the third network connection (7) connecting the VLAN module (3b) to the at least one second device (6) such that the at least one second device (6) becomes part of the first virtual local area network.

In an embodiment, the at least one second device (6) comprises at least one heating and/or ventilation and/or air-conditioning (HVAC) device (6). The at least one second device (6) can even be at least one HVAC device (6).

The present disclosure also deals with any of the aforementioned structures and/or buildings, wherein the at least one second device (6) sends the one or more heating and/or ventilation and/or air-conditioning (HVAC) signals indicative of at least one of:
- one or more room temperatures,
- one or more values indicative of volatile organic compounds,
- one or more flow rates φ through one or more control valves,
- one or more temperature drops ΔT across the one or more control valves,
- one or more values indicative of exchanged thermal power φ · ΔT
via the VLAN module (3b) (directly) to the cloud computing arrangement (1).

The skilled person envisages one or more lists containing subsets of the aforementioned HVAC signals. Items such as the one or more room temperatures can, by way of non-limiting example, be omitted. Also, the one or more values indicative of volatile organic compounds can be omitted.

The present disclosure deals with any of the aforementioned structures and/or buildings, wherein the one or more first devices (4) and the at least one second device (6) are different from the cloud computing arrangement (1). The present disclosure also deals with any of the aforementioned structures and/or buildings, wherein the one or more first devices (4) and the at least one second device (6) are different from the edge device (3). The present disclosure also deals with any of the aforementioned structures and/or buildings, wherein the one or more first devices (4) and the at least one second device (6) are different from the router (3). It is even envisaged that the one or more first devices (4) and the at least one second device (6) are different from the cloud computing arrangement (1) and are different from the edge device (3). It is still further envisaged that the one or more first devices (4) and the at least one second device (6) are different from the cloud computing arrangement (1) and are different from the router (3).

The instant disclosure also deals with any of the aforementioned structures and/or buildings, wherein the first network connection (2) connects to the cloud computing arrangement (1).

The first network connection (2) preferably comprises a first long-distance network connection. The first network connection (2) ideally is a first long-distance network connection. The first network connection (2) preferably comprises an Internet network connection. The first network connection (2) ideally is an Internet network connection. The first network connection (2) can comprise a first long-distance Internet network connection. The first network connection (2) can even be a first long-distance Internet network connection. It is also envisaged that the first network connection (2) comprises a first network connection (2) through a wide area network. It is even envisaged that the first network connection (2) is a first network connection (2) through a wide area network. In an embodiment, the first network connection (2) comprises a first long-distance network connection through a wide area network. More specifically the first network connection (2) can be a first long-distance network connection through a wide area network.

The present disclosure still further deals with any of the aforementioned structures and/or buildings, wherein the one or more first devices (4) are outside the first virtual local area network.

The instant disclosure deals with any of the aforementioned structures and/or buildings,
wherein the edge device (3) and/or the router (3) comprises at least one first port;
wherein the at least one first port connects to the first network connection (2); and
wherein the at least one second device (6) is configured to send the one or more HVAC signals via the third network connection (7) and via the VLAN module (3b) and via the at least one first port and via the first network connection (2) to the cloud computing arrangement (1).

The instant disclosure also pertains to any of the aforementioned structures and/or buildings, wherein the edge device (3) and/or the router (3) comprises at least one first port;
wherein the at least one first port connects to the first network connection (2); and
wherein the at least one second device (6) sends the one or more HVAC signals via the third network connection (7) and via the VLAN module (3b) and via the at least one first port and via the first network connection (2) (directly) to the cloud computing arrangement (1).

The instant disclosure deals with any of the aforementioned structures and/or buildings, the structure and/or the building involving at least one first port, wherein the at least one second device (6) comprises a second device port (6a), a firewall module (6b) for filtering the one or more HVAC signals, and a heating and/or ventilation and/or air-conditioning (HVAC) module (6c), wherein the HVAC module (6c) is configured to send the one or more heating and/or ventilation and/or air-conditioning (HVAC) signals via the firewall module (6b) of the at least one second device (6) and via the second device port (6a) and via the third network connection (7) and via the VLAN module (3b) and via the at least one first port and via the first network connection (2) to the cloud computing arrangement (1).

The present disclosure also pertains to any of the aforementioned structures and/or buildings, the structure and/or the building involving at least one first port, wherein the at least one second device (6) comprises a second device port (6a), a firewall module (6b) for filtering the one or more HVAC signals, and a heating and/or ventilation and/or air-conditioning (HVAC) module (6c), wherein the HVAC module (6c) sends the one or more heating and/or ventilation and/or air-conditioning (HVAC) signals indicative of at least one of:
- the one or more room temperatures,
- the one or more values indicative of volatile organic compounds,
- the one or more flow rates φ through the one or more control valves,
- the one or more temperature drops ΔT across the one or more control valves,
- the one or more values indicative of exchanged thermal power φ · ΔT
via the firewall module (6b) of the at least one second device (6) and via the second device port (6a) and via the third network connection (7) and via the VLAN module (3b) and via the at least one first port and via the first network connection (2) (directly) to the cloud computing arrangement (1).

The instant disclosure deals with any of the aforementioned structures and/or buildings, the structure and/or the building involving at least one first port, wherein the at least one second device (6) comprises a non-volatile memory; and
wherein the HVAC module (6c) has read-only access to the non-volatile memory such that the HVAC module (6c) can read configuration data from the non-volatile memory, the configuration data comprising at least one of:
- an address of an actuator within the first virtual local area network,
- an address of a sensor within the first virtual local area network,
- an address of a control valve within the first virtual local area network,
- an indication of a digital communication protocol to be used for sending the one or more HVAC signals to the cloud computing arrangement (1).

It is envisaged that the HVAC module (6c) has read-only access to the non-volatile memory such that the HVAC module (6c) can read configuration data from the non-volatile memory, the configuration data comprising at least one of:
- an address of an actuator within the structure and/or within the building, respectively,
- an address of a sensor within the structure and/or within the building, respectively,
- an address of a control valve within the structure and/or within the building, respectively,
- an indication of a digital communication protocol to be used for sending the one or more HVAC signals to the cloud computing arrangement (1).

In other words, the structure can comprise one or more actuators and/or one or more sensors and/or one or more control valves. Likewise, the building can comprise one or more actuators and/or one or more sensors and/or one or more control valves. The configuration data can also indicate a digital communication protocol to be used for sending the one or more HVAC signals to the cloud computing arrangement (1) via the VLAN module (3b). The configuration data can still further indicate a digital communication protocol to be used for sending the one or more HVAC signals to the cloud computing arrangement (1)
- via the firewall module (6b) of the at least one second device (6) and
- via the second device port (6a) and
- via the third network connection (7) and
- via the VLAN module (3b) and
- via the at least one first port and
- via the first network connection (2).

The instant disclosure deals with any of the aforementioned structures and/or buildings, the structure and/or the building involving at least one first port, wherein the at least one second device (6) comprises a configuration module (6d) and a or the non-volatile memory, wherein the configuration module (6d) has write access to the non-volatile memory such that the configuration module (6d) can write configuration data to the non-volatile memory or can write the configuration data to the non-volatile memory, the configuration data comprising at least one of:
- an or the address of an or the actuator within the first virtual local area network,
- an or the address of a or the sensor within the first virtual local area network,
- an or the address of a or the control valve within the first virtual local area network,
- an or the indication of a or the digital communication protocol to be used for sending the one or more HVAC signals to the cloud computing arrangement (1).

The aforementioned explanations concerning configuration data read by module (6c) apply also to the configuration data written by module (6d).

The instant disclosure deals with any of the aforementioned structures and/or buildings, the structure and/or the building involving a configuration module (6d), wherein the configuration module (6d) has write-only access to the non-volatile memory.

The present disclosure also deals with any of the aforementioned structures and/or buildings, the structure and/or the building involving a configuration module (6d), wherein the configuration module (6d) is configured to connect to a mobile handheld device (8) using a purely local and short-range communication link (9) such that the configuration module (6d) can read the configuration data from the mobile handheld device (8) and then write the configuration data to the non-volatile memory; and
wherein the purely local and short-range communication link (9) affords communication between the configuration module (6d) and the mobile handheld device (8) within the structure.

The instant disclosure also pertains to any of the aforementioned structures and/or buildings, the structures and/or buildings involving a configuration module (6d), wherein the configuration module (6d) is configured to connect to a mobile handheld device (8) using a purely local and short-range communication link (9) such that the configuration module (6d) can read the configuration data from the mobile handheld device (8) and then write the configuration data to the non-volatile memory; and
wherein the purely local and short-range communication link (9) affords communication between the configuration module (6d) and the mobile handheld device (8) only within the structure and/or only within the building, respectively.

In an embodiment, the structure comprises the mobile handheld device (8). Likewise, a building can comprise the mobile handheld device (8). More specifically, the commercial and/or industrial and/or residential building can comprise the mobile handheld device (8).

The present disclosure deals with any of the aforementioned structures and/or buildings, wherein the structure comprises at least one heating and/or ventilation and/or air-conditioning (HVAC) device, the HVAC device being selected from:
- a room temperature sensor,
- a sensor for reading a signal indicative of volatile organic compounds;
- a damper actuator,
- a control valve; and
wherein the at least one second device (6) comprises the HVAC device.

The skilled person envisages one or more lists containing subsets of the aforementioned HVAC devices. Items such as the room temperature sensor can, by way of non-limiting example, be omitted. Also, the sensor for reading a signal indicative of volatile organic compounds can be omitted.

In an embodiment, the at least one second device (6) is the HVAC device. It is envisaged that the structure comprises one or more rooms and one or more room temperature sensors inside the one or more rooms. Likewise, the building can comprise one or more rooms and one or more room temperature sensors inside the one or more rooms. More specifically, a commercial and/or industrial and/or residential building can comprise one or more rooms and one or more room temperature sensors inside the one or more rooms. The same considerations apply to sensors for reading a signal indicative of volatile organic compounds and to damper actuators and to control valves. Similar considerations apply to structures and/or to buildings comprising spaces rather than or in addition to rooms.

The instant disclosure deals with any of the aforementioned structures and/or buildings, wherein the VLAN module (3b) comprises a firewall module; and
wherein the firewall module of the VLAN module (3b) is configured to drop any data packet originating from the at least one second device (6) and being sent to the one or more first devices (4).

The present disclosure also deals with any of the aforementioned structures and/or buildings, wherein the edge device (3) and/or the router (3) comprises a firewall module; and
wherein the firewall module of the edge device (3) and/or of the router (3) is configured to masquerade any data packet originating from the one or more first devices (4) and being sent to the at least one second device (6).

The firewall module of the edge device (3) is preferably different from the firewall module of the VLAN module (3b). Likewise, the firewall module of the router (3) is preferably different from the firewall module of the VLAN module (3b).

The present disclosure still further deals with any of the aforementioned structures and/or buildings, wherein the VLAN module (3b) comprises a software module installed on the edge device (3) and/or installed on the router (3).

The present disclosure also deals with any of the aforementioned structures and/or buildings, wherein the VLAN module (3b) is a software module installed on the edge device (3) and/or installed on the router (3).

The present disclosure also deals with a heating and/or ventilation and/or air-conditioning (HVAC) device (6), the HVAC device (6) comprising a HVAC device port (6a) for connecting to the VLAN module (3b) of a structure according to any of the claims 1 to 13, a firewall module (6b) for filtering one or more heating and/or ventilation and/or air-conditioning (HVAC) signals, and a heating and/or ventilation and/or air-conditioning (HVAC) module (6c); and
wherein the HVAC module (6c) is configured to send the one or more HVAC signals indicative of at least one of:
- one or more room temperatures,
- one or more values indicative of volatile organic compounds,
- one or more flow rates φ through one or more control valves,
- one or more temperature drops ΔT across the one or more control valves,
- one or more values indicative of exchanged thermal power φ · ΔT
via the firewall module (6b) of the HVAC device (6) and via the HVAC device port (6a) and via the VLAN module (3b) to a cloud computing arrangement (1).

The instant disclosure also pertains to a heating and/or ventilation and/or air-conditioning (HVAC) device (6), the HVAC device (6) comprising a HVAC device port (6a) for connecting to the VLAN module (3b) of a structure according to any of the claims 1 to 13, a firewall module (6b) for filtering one or more heating and/or ventilation and/or air-conditioning (HVAC) signals, and a heating and/or ventilation and/or air-conditioning (HVAC) module (6c); and
wherein the HVAC module (6c) sends the one or more HVAC signals indicative of at least one of:
- one or more room temperatures,
- one or more values indicative of volatile organic compounds,
- one or more flow rates φ through one or more control valves,
- one or more temperature drops ΔT across the one or more control valves,
- one or more values indicative of exchanged thermal power φ · ΔT
via the firewall module (6b) of the HVAC device (6) and via the HVAC device port (6a) and via the VLAN module (3b) (directly) to a cloud computing arrangement (1).

It is envisaged that the HVAC device port (6a) is configured to connect to the VLAN module (3b) of any of the aforementioned structures and/or buildings.

The present disclosure also pertains to any of the aforementioned HVAC devices (6), wherein the HVAC module (6c) comprises at least one of:
- a room temperature sensor,
- a sensor for reading a signal indicative of volatile organic compounds;
- a damper actuator,
- a control valve.

The instant disclosure also pertains to any of the aforementioned HVAC devices (6), wherein the HVAC module (6c) is selected from:
- a room temperature sensor,
- a sensor for reading a signal indicative of volatile organic compounds;
- a damper actuator,
- a control valve.

It should be understood that the foregoing relates only to certain embodiments of the disclosure. Numerous changes may be made therein without departing from the scope of the disclosure as defined by the following claims. It should also be understood that the disclosure is not restricted to the illustrated embodiments. Various modifications can be made within the scope of the following claims.

Reference numerals
1 cloud computing arrangement and/or remote controller
2 network connection
3 edge device and/or router
3a DNS module
3b VLAN module
4 one or more first devices and/or one or more first controllers
5 network connection
6 one or more second devices and/or one or more second controllers, at least one second device, HVAC device
6a port
6b firewall module
6c HVAC module
6d configuration module
7 network connection
8 mobile handheld device
9 link

## Claims

1. A structure comprising an edge device (3) and/or a router (3), one or more first devices (4) and at least one second device (6);
wherein the at least one second device (6) is different from the one or more first devices (4);
the structure comprising a network, the network comprising:
a first network connection (2) for connecting the edge device (3) and/or the router (3) to a cloud computing arrangement (1) outside the structure;
a second network connection (5) connecting the edge device (3) and/or the router (3) to the one or more first devices (4);
wherein the edge device (3) and/or the router (3) comprises a virtual local area network (VLAN) module (3b);
wherein the network comprises a first virtual local area network and a third network connection (7), the third network connection (7) connecting the VLAN module (3b) to the at least one second device (6), the at least one second device (6) being part of the first virtual local area network; and
wherein the at least one second device (6) is configured to send one or more heating and/or ventilation and/or air-conditioning (HVAC) signals indicative of at least one of:
- one or more room temperatures,
- one or more values indicative of volatile organic compounds,
- one or more flow rates φ through one or more control valves,
- one or more temperature drops ΔT across the one or more control valves,
- one or more values indicative of exchanged thermal power φ · ΔT
via the VLAN module (3b) to the cloud computing arrangement (1).

2. The structure according to claim 1, wherein the first network connection (2) connects to the cloud computing arrangement (1).

3. The structure according to any of the claims 1 to 2, wherein the one or more first devices (4) are outside the first virtual local area network.

4. The structure according to any of the claims 1 to 3, wherein the edge device (3) and/or the router (3) comprises at least one first port;
wherein the at least one first port connects to the first network connection (2); and
wherein the at least one second device (6) is configured to send the one or more HVAC signals via the third network connection (7) and via the VLAN module (3b) and via the at least one first port and via the first network connection (2) to the cloud computing arrangement (1).

5. The structure according to claim 4, wherein the at least one second device (6) comprises a second device port (6a), a firewall module (6b) for filtering the one or more HVAC signals, and a heating and/or ventilation and/or air-conditioning (HVAC) module (6c), wherein the HVAC module (6c) is configured to send the one or more heating and/or ventilation and/or air-conditioning (HVAC) signals via the firewall module (6b) of the at least one second device (6) and via the second device port (6a) and via the third network connection (7) and via the VLAN module (3b) and via the at least one first port and via the first network connection (2) to the cloud computing arrangement (1).

6. The structure according to claim 5, wherein the at least one second device (6) comprises a non-volatile memory; and
wherein the HVAC module (6c) has read-only access to the non-volatile memory such that the HVAC module (6c) can read configuration data from the non-volatile memory, the configuration data comprising at least one of:
- an address of an actuator within the first virtual local area network,
- an address of a sensor within the first virtual local area network,
- an address of a control valve within the first virtual local area network,
- an indication of a digital communication protocol to be used for sending the one or more HVAC signals to the cloud computing arrangement (1).

7. The structure according to any of the claims 5 to 6, wherein the at least one second device (6) comprises a configuration module (6d) and a or the non-volatile memory, wherein the configuration module (6d) has write access to the non-volatile memory such that the configuration module (6d) can write configuration data to the non-volatile memory or can write the configuration data to the non-volatile memory, the configuration data comprising at least one of:
- an or the address of an or the actuator within the first virtual local area network,
- an or the address of a or the sensor within the first virtual local area network,
- an or the address of a or the control valve within the first virtual local area network,
- an or the indication of a or the digital communication protocol to be used for sending the one or more HVAC signals to the cloud computing arrangement (1).

8. The structure according to claim 7, wherein the configuration module (6d) has write-only access to the non-volatile memory.

9. The structure according to any of the claims 7 to 8, wherein the configuration module (6d) is configured to connect to a mobile handheld device (8) using a purely local and short-range communication link (9) such that the configuration module (6d) can read the configuration data from the mobile handheld device (8) and then write the configuration data to the non-volatile memory; and
wherein the purely local and short-range communication link (9) affords communication between the configuration module (6d) and the mobile handheld device (8) within the structure.

10. The structure according to any of the claims 1 to 9, wherein the structure comprises at least one heating and/or ventilation and/or air-conditioning (HVAC) device, the HVAC device being selected from:
- a room temperature sensor,
- a sensor for reading a signal indicative of volatile organic compounds;
- a damper actuator,
- a control valve; and
wherein the at least one second device (6) comprises the HVAC device.

11. The structure according to any of the claims 1 to 10, wherein the VLAN module (3b) comprises a firewall module; and
wherein the firewall module of the VLAN module (3b) is configured to drop any data packet originating from the at least one second device (6) and being sent to the one or more first devices (4).

12. The structure according to any of the claims 1 to 11, wherein the edge device (3) and/or the router (3) comprises a firewall module; and
wherein the firewall module of the edge device (3) and/or of the router (3) is configured to masquerade any data packet originating from the one or more first devices (4) and being sent to the at least one second device (6).

13. The structure according to any of the claims 1 to 12, wherein the VLAN module (3b) comprises a software module installed on the edge device (3) and/or installed on the router (3).

14. A heating and/or ventilation and/or air-conditioning (HVAC) device (6), the HVAC device (6) comprising a HVAC device port (6a) for connecting to the VLAN module (3b) of a structure according to any of the claims 1 to 13, a firewall module (6b) for filtering one or more heating and/or ventilation and/or air-conditioning (HVAC) signals, and a heating and/or ventilation and/or air-conditioning (HVAC) module (6c); and
wherein the HVAC module (6c) is configured to send the one or more HVAC signals indicative of at least one of:
- one or more room temperatures,
- one or more values indicative of volatile organic compounds,
- one or more flow rates φ through one or more control valves,
- one or more temperature drops ΔT across the one or more control valves,
- one or more values indicative of exchanged thermal power φ · ΔT
via the firewall module (6b) of the HVAC device (6) and via the HVAC device port (6a) and via the VLAN module (3b) to a cloud computing arrangement (1).

15. The HVAC device (6) according to claim 14, wherein the HVAC module (6c) comprises at least one of:
- a room temperature sensor,
- a sensor for reading a signal indicative of volatile organic compounds;
- a damper actuator,
- a control valve.
